# EUROPEAN PATENT APPLICATION

(11) **EP 1 946 948 A1**
(43) Date of publication of application: **23.07.2008**
(21) Application number: 06811890.0
(22) Date of filing: 17.10.2006
(51) Int. Cl.: B60H 1/00, B60H 3/06

(54) **METHOD OF AIR CONDITIONING VEHICLE BEFORE OCCUPANT ENTERS VEHICLE, AND AIR CONDITIONER**

(30) Priority: 20.10.2005 JP 2005305614
(71) Applicant: Calsonic Kansei Corporation, Tokyo 164-8602 (JP)
(72) Inventor: OZEKI, Yukio c/o Calsonic Kansei Corp., 164-8602 Tokyo (JP); SOMA, Hiroshi c/o Calsonic Kansei Corp., 164-8602 Tokyo (JP); OHASHI, Toshio c/o Calsonic Kansei Corp., 164-8602 Tokyo (JP); KITAGAWA, Takehiko c/o Calsonic Kansei Corp., 164-8602 Tokyo (JP)
(74) Representative: Grünecker, Kinkeldey, Stockmair & Schwanhäusser Anwaltssozietät
(86) International application number: PCT/JP2006/320635
(87) International publication number: WO 2007/046366

(57) **Abstract**

A pre-riding air conditioning method in which if an intention of a passenger to ride in a vehicle is detected, an inside air fan (3) is operated to stir air in a passenger room, and an air conditioner comprising the inside air fan (3) which can stir air in the passenger room, and a control (21) which operates the inside air fan (3) when the intention of a passenger to ride in the vehicle is detected.

## Description

### TECHNICAL FIELD

The present invention relates to a pre-riding air conditioning method for air conditioning of a passenger room before a passenger rides in a vehicle, and to an air conditioner.

### BACKGROUND ART

Conventionally, air grows foul in a passenger room of a vehicle while parking it, and the temperature in the passenger room is increased in some cases. If a passenger enters the high temperature passenger room, the passenger can feel uncomfortable with hot air and smell remaining at an upper portion in the passenger room in some cases.

Hence, as a technique related to the conventional technique of this kind, Japanese Patent Application Laid-open No. 2004-196099 (hereinafter referred to as Patent Document 1) discloses a "vehicular air cleaning apparatus" including a smell sensor (gas sensor) for detecting smell in a passenger room, and an air cleaning unit that provides ventilation to eliminate the smell in the passenger room. In this conventional technique, when a vehicle is parked and an ignition key is in an OFF state, if the smell sensor detects smell in the passenger room stronger than a predetermined value, the air cleaning unit provides ventilation to remove the smell in the passenger room. Therefore, it is possible to prevent a passenger from feeling uncomfortable at the time of entering the passenger room.

According to the conventional technique described in the patent document 1, however, when a vehicle is parked and an engine thereof is stopped for a long time, and if the air cleaning unit is operated several times, a load on a battery which is a driving source is increased. Therefore, there is a problem that the battery is exhausted.

The present invention has been achieved in view of such conventional techniques, and it is an object of the invention to provide a pre-riding air conditioning method and an air conditioner capable of lowering the temperature in a passenger room before a passenger rides in a vehicle, and capable of lowering a load on a battery of the vehicle.

### DISCLOSURE OF THE INVENTION

To achieve the above object, in the pre-riding air conditioning method of the present invention, if an intention of a passenger to ride in a vehicle is detected, an inside air fan is operated to stir air in a passenger room.

The air conditioner of the present invention includes an inside air fan capable of stirring air in a passenger room, and a control for operating the inside air fan when an intention of a passenger to ride in a vehicle is detected.

### BRIEF DESCRIPTION OF THE DRAWINGS

Fig. 1 is a vertical sectional view showing an air conditioner according to a first embodiment of the present invention;
Fig. 2 is a perspective view of the air conditioner according to the first embodiment of the present invention;
Fig. 3 is a block diagram showing a control unit of the air conditioner according to the first embodiment of the present invention;
Fig. 4 is an explanatory flowchart of operation of the air conditioner according to the first embodiment of the present invention when a vehicle is parked;
Fig. 5 is a graph showing characteristics of control of operation of a blower fan provided in the air conditioner according to the first embodiment of the present invention;
Fig. 6 is an explanatory flowchart of operation of the air conditioner according to the first embodiment of the present invention when an engine is started;
Fig. 7 is an explanatory diagram of operations of an inside/outside air switching door and a second filter provided in the air conditioner according to the first embodiment of the present invention;
Fig. 8 is a diagram showing characteristics of transition of the temperature in the passenger room in air conditioning modes of the air conditioner according to the first embodiment of the present invention;
Fig. 9 is a block diagram showing a control unit of an air conditioner according to a second embodiment of the present invention; and
Fig. 10 is an explanatory flowchart of a control operation performed by the control unit shown in Fig. 9.

### BEST MODE FOR CARRYING OUT THE INVENTION

Embodiments of the present invention will be explained below.

### (First Embodiment)

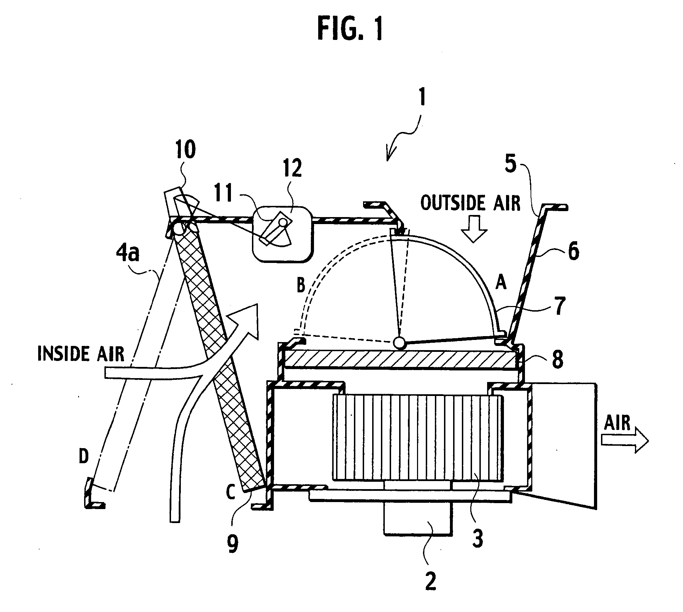

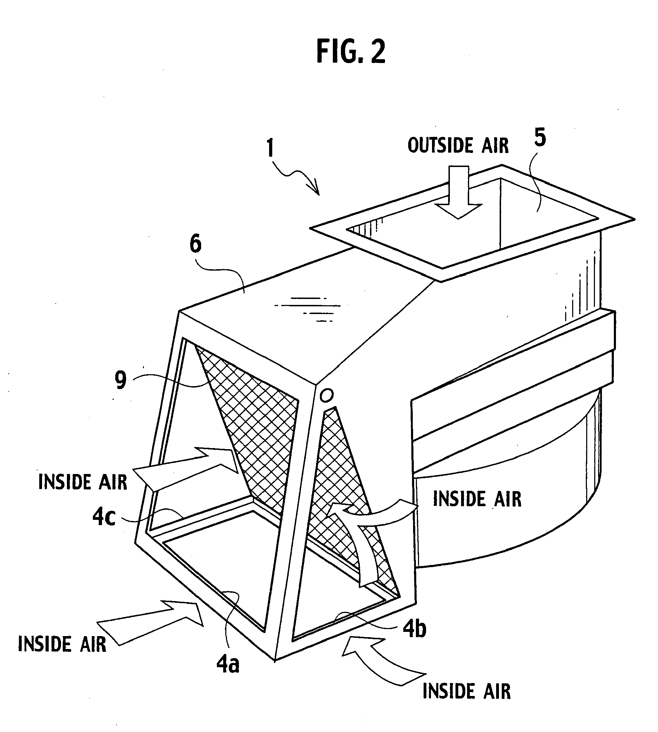

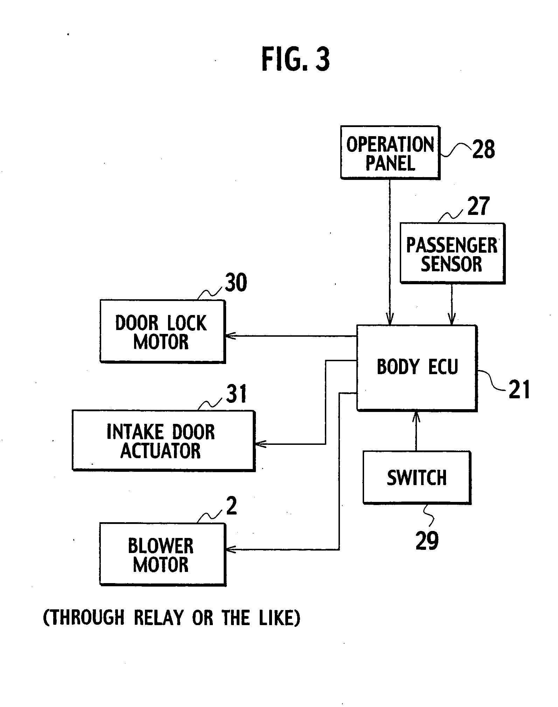

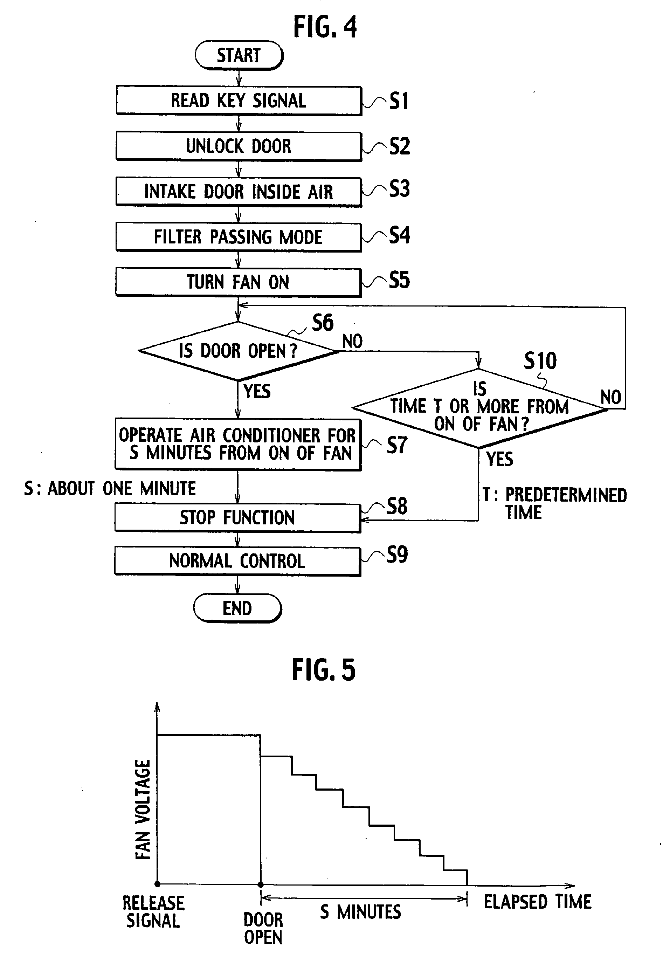

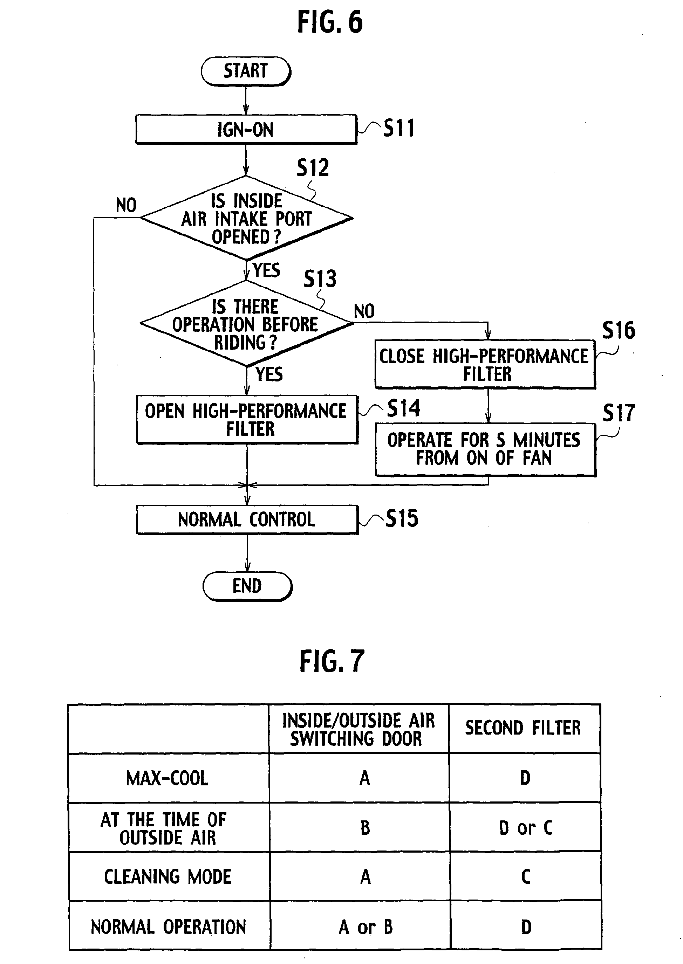

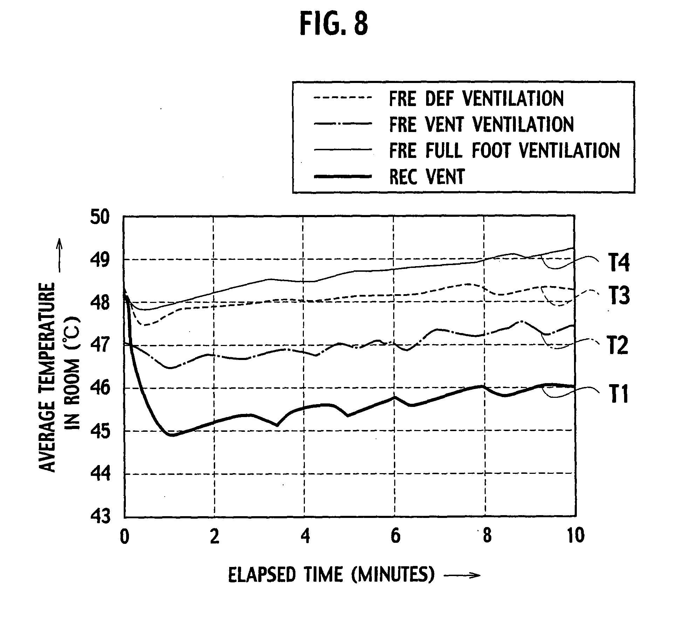

Fig. 1 is a vertical sectional view showing an air conditioner according to an embodiment, Fig. 2 is a perspective view of the air conditioner according to the embodiment, Fig. 3 is a block diagram showing a control unit of the air conditioner according to the embodiment, Fig. 4 is an explanatory flowchart of operation of the air conditioner according to the embodiment when a vehicle is parked, Fig. 5 is a graph showing characteristics of control of operation of a blower fan provided in the air conditioner according to the embodiment, Fig. 6 is an explanatory flowchart of operation of the air conditioner according to the embodiment when an engine is started, Fig. 7 is an explanatory diagram of operations of an inside/outside air switching door and a second filter provided in the air conditioner according to the embodiment, and Fig. 8 is a diagram showing characteristics of transition of the temperature in the passenger room in air conditioning modes of the air conditioner according to the embodiment.

As shown in Figs. 1 and 2, an air conditioner 1 of the embodiment includes a blower fan 3, which is driven by a motor 2, for blowing air into an air conditioning unit having a heat exchanger for heating and a heat exchanger for cooling (both not shown), a blower case 6 which accommodates the blower fan 3 and which has inside air intake ports 4a to 4c and an outside air intake port 5, an inside/outside air switching door (intake door) 7, which is disposed on the intake side of the blower fan 3, for switching between the inside air intake ports 4a to 4c and the outside air intake port 5, a first filter 8, which is provided on the intake side of the blower fan 3, for capturing foreign materials in the air, a second filter 9, which is provided inside of the inside air intake ports 4a to 4c, and which an upper end portion is a center of a rotation and can turn between the position C and the position D in Fig. 1, and a driving body 12 which drives the second filter 9 through link members 10 and 11.

The air conditioner 1 of the embodiment includes a vent blowoff port through which conditioned air is sent out mainly toward an upper-body of a passenger, a foot blowoff port through which conditioned air is sent toward feet of a passenger, and a defrosting blowoff port through which conditioned air is sent toward a windshield. These blowoff ports can be switched by a door which can open and close the ports (not shown).

The second filter 9 includes a high-performance dust collecting deodorant filter which removes foreign materials staying in the passenger room, e.g., TVOC (total volatile organic compounds) or pollen. The inside air intake port 4a is opposed to a front surface of the second filter 9. Other inside air intake ports 4b and 4c are provided at both sides end of the second filter 9 each and are opposed to each other. As shown in Figs. 1 and 2, when the second filter 9 is turned to the position C, inside air is introduced through the inside air intake ports 4a to 4c, the second filter 9 captures foreign materials included in the inside air, thereby cleaning the air. When the second filter 9 is turned to the position D in Fig. 1, inside air is introduced through the inside air intake ports 4b and 4c provided on the opposite sides, and the air bypasses the second filter 9 and thus, air is not cleaned.

By appropriately switching the positions of the inside/outside air switching door 7 and the second filter 9, one of operation modes of the air conditioner 1 can be selected.

According to the first embodiment, the air conditioner 1 has four operation modes of the air conditioning operation as shown in Fig. 7, i.e., a maximum cooling (Max-Cool) mode, an outside air mode, a cleaning mode and a normal mode.

More specifically, in a maximum cooling (Max-Cool) mode, the inside/outside air switching door 7 is turned toward A side in Fig. 1, the second filter 9 is turned to the position D in Fig. 1, thereby introducing inside air through the inside air intake ports 4b and 4c provided on the opposite sides, and the maximum cooling is carried out. At that time, since the inside air bypasses the second filter 9, air is not cleaned. In the outside air mode, the inside/outside air switching door 7 is turned toward B side in Fig. 1, thereby introducing outside air. At that time, the second filter 9 is in the position D or C in Fig. 1, but the inside air is not introduced. In the cleaning mode, the inside/outside air switching door 7 is turned toward the A side in Fig. 1 to introduce the inside air, and the second filter 9 is turned to the position C in Fig. 1, thereby cleaning air. At the time of the normal air conditioning operation, the inside/outside air switching door 7 is turned to the A side or B side in Fig. 1 so that inside air or outside air is introduced, and the second filter 9 is turned to the position D in Fig. 1, thereby not cleaning air.

In the first embodiment, the switching operation between the operation modes of the air conditioner 1 is controlled by a control (body ECU) 21.

As shown in Fig. 3, signals are input to the control 21 from a passenger sensor 27, an operation panel 28 and a switch 29. A signal from the control 21 is output to the motor 2 of the blower fan 3 shown in Fig. 1, a door lock motor 30 which release the door lock, and an intake door actuator 31 for driving the inside/outside air switching door 7.

Before a passenger rides in a vehicle, the air conditioning operation is carried out in the cleaning mode according to a process procedure shown in Fig. 4. That is, as step S1, if a passenger operates a door key (not shown), a key signal is sent to the control 21 and the control 21 reads this key signal. The control 21 which read the key signal then operates the door lock motor 30 to unlock the door as step S2, and turns the inside/outside air switching door 7 toward A in Fig. 1 to open the inside air intake ports 4a to 4c as step S3. The driving body 12 drives the second filter 9 to the position C in Fig. 1 through the link members 10 and 11 as step S4, and the air conditioner is brought into a mode in which the inside air passes through the second filter 9. Next, as step S5, the blower fan 3 is turned ON to rotate the same at high speed, a large amount of inside air is introduced through the inside air intake ports 4a to 4c from the passenger room, high-performance dust collecting deodorant operation is carried out by the second filter 9, and clean air is sent into the passenger room through the vent blowoff port (not shown) from the air conditioner 1.

Next, as step S6, the control 21 determines whether a vehicle door is opened. As a result, if the vehicle door is opened, as step S7, the control 21 reduces the voltage supplied to the blower fan 3 step by step as shown in Fig. 5. With this configuration, the rotation speed of the blower fan 3 is gradually lowered, and when a predetermined time S is elapsed after the vehicle door is opened, e.g., after one minute, the rotation of the blower fan 3 is stopped. In this manner, the air conditioning function before riding in the vehicle is stopped as step S8, and the air conditioner is brought into the normal air conditioning operation as step S9 . On the other hand, when the control 21 determines that the vehicle door is not opened at step S6, it is determined as step S10 whether the air conditioner operates for a predetermined time T after the blower fan 3 starts operating. As a result, if the air conditioner operates for the predetermined time T or longer after the blower fan 3 starts operating, the step is advanced to step S8, the air conditioning function before riding in the vehicle is stopped, and the air conditioner is brought into the normal air conditioning operation as step S9.

When a driver starts the vehicle, air conditioning operation in the passenger room is carried out according to a process procedure shown in Fig. 6. That is, as step S11, if the ignition key of the vehicle is turned ON, the control 21 reads such information. The control 21 then turns the inside/outside air switching door 7 toward A in Fig. 1 as step S12, and the control 21 determines whether the inside air intake ports 4a to 4c are opened. As a result thereof, if the inside air intake ports 4a to 4c are opened, it is determined whether operation before riding (i.e., air conditioning operation before riding in the vehicle) is carried out as step S13. As a result thereof, if it is determined that the operation before riding is carried out, the second filter 9 is turned to the position D in Fig. 1 as step S14, inside air is introduced from the inside air intake ports 4b and 4c provided on both sides such as to bypass the second filter 9. Next, the air conditioner is brought into the normal air conditioning operation as step S15.

Meanwhile, if it is determined that the operation before riding is not carried out at step S13, as step 16, the control 21 turns the second filter 9 to the position C in Fig. 1, thereby allowing air introduced from the inside air intake port 4 to pass through the second filter 9. As a result, high-performance dust collecting deodorant operation is carried out by the second filter 9, and then, the cleaned air is sent into the passenger room from the air conditioner 1. As step S17, when the predetermined time S is elapsed after the blower fan 3 starts operating, e.g., after one minute, the rotation of the blower fan 3 is stopped.

According to the first embodiment having such a structure, if the control 21 reads the key signal which is sent when a passenger operates the door key, thereby detecting the intention of the passenger to ride in a vehicle, the door of the vehicle is unlocked, the inside/outside air switching door 7 is switched toward the inside air intake side, the second filter 9 is brought into the passing mode, the blower fan 3 is rotated at high speed, hot air staying at an upper portion in the passenger room is stirred, and the temperature can be lowered. At the same time, the high-performance dust collecting deodorant operation is carried out, and the cleaned air is sent into the passenger room from the vent blowoff port. Therefore, air in the passenger room can be cleaned before the passenger rides in the vehicle. Since cooldown (lowering of temperature in the passenger room) after the passenger rides in the vehicle can swiftly be carried out, a comfortable passenger room space can be obtained in a short time. According to an experiment carried out by the present assignee, the temperature in the passenger room is varied depending upon the air conditioning modes as shown in Fig. 8. That is, the average temperature T1 in the passenger room at the time of vent blowoff of inside air circulation, is lowered to about 45°C from about 48°C for about one minutes after the air blowoff is started, and the temperature T1 is varied at a level lower than the average temperature T2 in the passenger room at the time of full foot ventilation of outside air introduction, the average temperature T3 in the passenger room at the time of ventilation of vent, and the average temperature T4 in the passenger room at the time of defrosting ventilation.

By lowering the temperature at the upper portion in the passenger room before a passenger rides in the vehicle, it is possible to prevent the passenger from feeling uncomfortable at the time of entering the passenger room.

According to the first embodiment, when a passenger opens the vehicle door, the air conditioning operation in the cleaning mode is released, and the operation of the blower fan 3 is limited when the passenger tries to ride in the vehicle. Therefore, it is possible to reduce a load on a battery of the vehicle. When the vehicle door is not opened after the door of the vehicle is unlocked, the blower fan 3 is stopped when the predetermined time is elapsed after the blower fan 3 starts operating. For this reason also, it is possible to prevent exhaust of the battery of the vehicle. Since it is possible to prevent the battery of the vehicle from being exhausted, the vehicle can be operated in a stable state.

In the first embodiment, the second filter 9 including the high-performance dust collecting deodorant filter is of a movable type, and inside air bypasses the second filter 9 in the maximum cooling mode and at the time of normal air conditioning operation. Accordingly, the time during which the second filter 9 is used can be limited. Thus, the lifetime of the second filter 9 can be enhanced.

In the first embodiment, the blower fan 3 constitutes the inside air fan which is operated if an intention of a passenger to ride in a vehicle is detected, thereby stirring air in the passenger room.

Although air is sent into the passenger room from the vent blowoff port in the first embodiment, it is also possible to send air into the passenger room from other defrosting blowoff port or foot blowoff port. When hot air in the upper portion in the passenger room is to be stirred by sending air into the passenger room from the defrosting blowoff port, however, since heat of a windshield of the vehicle has effect on the stirring operation, it is advantageous to send air into the passenger room from the vent blowoff port as described above.

### (Second Embodiment)

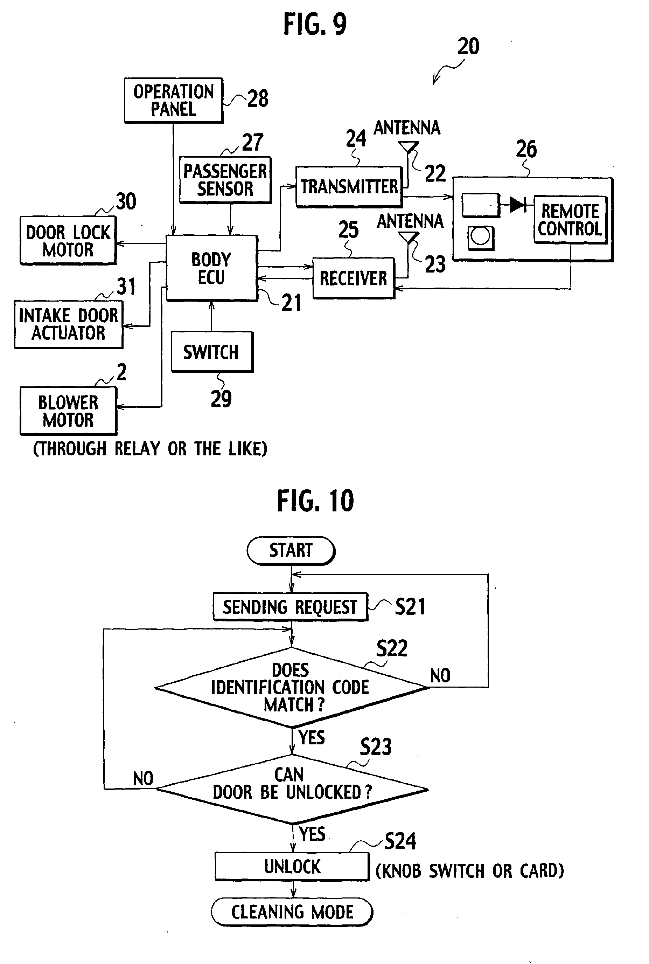

Fig. 9 is a block diagram showing a control unit of an air conditioner according to a second embodiment of the present invention. Fig. 10 is an explanatory flowchart of a control operation performed by the control unit shown in Fig. 9.

The air conditioner of the present embodiment shown in Figs. 9 and 10 is applied to a vehicle whose door can be opened and closed by a remote control 26.

That is, in the second embodiment, a control (body ECU) 21 is connected to the control 21. The control 21 includes a transmitter 24 including antenna 22 and a receiver 25 including antenna 23, and includes the remote control 26 which sends and receives signals between the transmitter 24 and the receiver 25. The remote control 26 constitutes a portable encryption signal transmitter which automatically transmits an encryption signal when a passenger carries the remote control 26 and approaches a vehicle within a given distance. The control 21 constitutes a keyless determining device which determines whether the vehicle receives the encryption signal and unlocks the door.

Like the first embodiment, signals from the passenger sensor 27, the operation panel 28 and the switch 29 are input to the control 21, and a signal from the control 21 is output to the motor 2 of the blower fan 3 shown in Fig. 1 described above, the door lock motor 30 which unlocks the door, and the intake door actuator 31 which drives the inside/outside air switching door 7.

In the second embodiment, before a passenger rides in the vehicle, the door unlocking operation of the vehicle door is carried out according to a process procedure shown in Fig. 10. That is, when the passenger carries the remote control 26 and approaches the vehicle within a given distance, the remote control 26 transmits an encryption signal based on a sending request from the control 21 on the vehicle side as step S21, and the control 21 receives the encryption and determines whether it matches with an identification code as step S22. As a result, when it matches with the identification code, this means that the door can be unlocked. Therefore, as step S23 , it is determined whether the door can be unlocked. If the door can be unlocked, a passenger unlocks the door by touching a knob switch or using a card as step S24. When it is determined whether the door can be unlocked and it is determined that the door can be unlocked at step S23 , the air conditioner is operated in the cleaning mode according to the process procedures at S3 to S10 shown in Fig. 4.

In thus configured second embodiment, the same effect as that of the first embodiment can be also obtained.

Although an encryption signal is automatically transmitted when the remote control 26 approaches the vehicle within a given distance in the second embodiment, the present invention is not limited to this, and an encryption signal can be transmitted when a passenger manually operates the remote control 26.

### INDUSTRIAL APPLICABILITY

In the present invention, there is an effect that it is possible to prevent a passenger from feeling uncomfortable when at the time of entering a passenger room, and an air conditioner can be operated in a state where a battery of a vehicle is prevented from being exhausted and the vehicle is stable. Therefore, the air conditioner can be applied as a vehicular air conditioner and the air conditioner can widely be applied as an air conditioner for a general machine or industrial machine.

## Claims

**1.** A pre-riding air conditioning method, wherein
if an intention of a passenger to ride in a vehicle is detected, an inside air fan is operated and air in a passenger room is stirred.

**2.** The pre-riding air conditioning method according to claim 1, wherein
when air is stirred by the inside air fan, the stirred air is passed through a filter, and air in the passenger room is cleaned.

**3.** The pre-riding air conditioning method according to claim 1, wherein
the inside air fan is stopped after a predetermined time is elapsed.

**4.** The pre-riding air conditioning method according to claim 1, wherein
when air is stirred by the inside air fan, the stirred air is sent out from a vent blowoff port.

**5.** An air conditioner comprising
an inside air fan which can stir air in a passenger room,
and a control which operates the inside air fan when an intention of a passenger to ride in a vehicle is detected.

**6.** The air conditioner according to claim 5,further comprising
a filter which cleans air in the passenger room and through which an stirred air passes when air is stirred by the inside air fan.

**7.** The air conditioner according to claim 5, wherein
the control stops the inside air fan after a predetermined time is elapsed.

## Amended claims

### Amended claims under Art. 19.1 PCT

1. (amended) A pre-riding air conditioning method of an air conditioner comprising
a blower fan which is driven by a motor and which blows air toward an air conditioning unit,
a blower case which accommodates the blower fan therein and which has an inside air intake port and an outside air intake port,
an inside/outside air switching door which is disposed in an intake side of the blower fan and which switches between the inside air intake port and the outside air intake port, and
a filter turnably provided inside of the inside air intake port, in which
one of a mode where inside air introduced through the inside air intake port passes through the filter and a mode where the inside air bypasses the filter can be selected, wherein
if an intention of a passenger to ride in a vehicle is detected, the inside/outside air switching door is switched to inside air, the blower fan is operated and air in a passenger room is stirred.

2. (cancelled)

3. (amended) The pre-riding air conditioning method according to claim 1, wherein
the blower fan is stopped after a predetermined time is elapsed.

4. (amended) The pre-riding air conditioning method according to claim 1, wherein
when air is stirred by the blower fan, the stirred air is sent out from a vent blowoff port.

5. (amended) An air conditioner comprising
a blower fan which is driven by a motor and which blows air toward an air conditioning unit,
a blower case which accommodates the blower fan therein and which has an inside air intake port and an outside air intake port,
an inside/outside air switching door which is disposed in an intake side of the blower fan and which switches between the inside air intake port and the outside air intake port, and
a filter turnably provided inside of the inside air intake port, in which
one of a mode where inside air introduced through the inside air intake port passes through the filter and a mode where the inside air bypasses the filter can be selected, wherein
the air conditioner comprises a control which switches the inside/outside air switching door to inside air and operates the blower fan to stir air in a passenger room if an intention of a passenger to ride in a vehicle is detected.

6. (cancelled)

7. (amended) The air conditioner according to claim 5, wherein
the control stops the blower fan after a predetermined time is elapsed.

8. (added) The air conditioner comprising
a blower fan which is driven by a motor and which blows air toward an air conditioning unit,
a blower case which accommodates the blower fan therein and which has an inside air intake port and an outside air intake port,
an inside/outside air switching door which is disposed in an intake side of the blower fan and which switches between the inside air intake port and the outside air intake port,
a first filter which is provided on an intake side of the blower fan and which captures foreign materials in air, and
a second filter turnably provided inside of the inside air intake port, wherein
one of a mode where inside air introduced through the inside air intake port passes through the second filter and a mode where the inside air bypasses the second filter can be selected.
